# EUROPEAN PATENT SPECIFICATION

(11) **EP 3 590 324 B1**
(45) Date of publication and mention of the grant of the patent: **03.11.2021**
(21) Application number: 19183854.9
(22) Date of filing: 02.07.2019
(51) Int. Cl.: A01D 90/12

(54) **LOADER WAGON AND METHOD FOR UNLOADING A LOADER WAGON**
LADEWAGEN UND VERFAHREN ZUM ENTLADEN EINES LADEWAGENS
WAGON CHARGEUR ET PROCÉDÉ DE DÉCHARGEMENT D'UN WAGON CHARGEUR

(30) Priority: 03.07.2018 NL 2021232
(43) Date of publication of application: 08.01.2020
(73) Proprietor: SV Group B.V., 7461AG Rijssen (NL)
(72) Inventor: Rumpt, Geuchien Gerard, 7461 AG Rijssen (NL); Molendijk, Tom, 7461 AG Rijssen (NL); te Raa, Gerben, 7461 AG Rijssen (NL); Hoving, Mark, 7461 AG Rijssen (NL)
(74) Representative: V.O.

(56) References cited:
- DE-A1- 2 225 598
- DE-A1-102015 103 688
- DE-U1-202007 004 540

## Description

### FIELD AND BACKGROUND OF THE INVENTION

The invention relates to a loader wagon. The invention also relates to a method for discharging harvested stalk material from a loader wagon.

Such loader wagons and such a method are known from German patent application 10 2015 103 688. In this loader wagon, a discharge assist mechanism is arranged adjacent to the loader arrangement in a front portion of the loader wagon remote from the discharge tailgate at a rear end of the loader wagon. The discharge assist mechanism includes a discharge assist floor panel of the scraper floor, which floor panel is pivotable about a horizontal axis at a front side of the panel and a discharge assist member in a front portion of the loader wagon, which is pivotable or linearly movable in forward and rearward directions. During discharging, the discharge assist floor panel and member are cyclically moved, initially with a relatively high frequency and small amplitude for loosening harvest material in a front portion of the load space and finally with a relatively low frequency and high amplitude for moving harvested material off a forward portion of the scraper floor.

It is further noted that DE 22 25 598 A1 discloses a loader wagon according to the pre-characterizing portion of the appended independent claim 1.

### SUMMARY OF THE INVENTION

It is an object of the present invention to allow effective discharging of harvested material from a loader wagon, in particular from a forward portion of the load space of the loader wagon, but to achieve this with a more simple, lightweight and space efficient construction.

According to the invention, this object is achieved by providing a loader wagon according to claim 1. The invention can also be embodied in a method according to claim 5.

Because the lower end of the front wall in the rearward position is rearward of at least a forward portion of the infeed passage, a substantial amount of the harvested material above the infeed passage can be pushed towards the conveyors. This would, however, entail that some compressed harvested material in the infeed passage would bulge up forward of the front wall after the lower end of the front wall has been moved rearward and would drop off the loader wagon, in particular when the lower end portion of the front wall would be moved back forward again. Such harvested material would then be lost or have to be collected, in particular if discharging is carried out at a location where significant amounts of lost harvested stalk material cannot be left, such as along a public road. This would be time consuming and cumbersome. Also, bulged-up material would become trapped between the front wall and a forward upper end of the infeed passage and can block full forward return movement of the front wall.

However, because a shield is connected to a lower end of the front wall along an edge of the shield for moving rearward and forward with the lower end of the front wall and the shield projects forwardly from the lower end of the front wall and closes off the portion of the infeed passage forward of the lower end of the front wall, the upper end of the infeed passage is automatically closed off forward of the lower end of the front wall if that lower end is moved rearward for urging harvested material towards the conveyors, so that harvested material in the infeed passage is, at least to a substantial extent, prevented from bulging up forward of the lower end of the rear wall if that lower end is moved rearward and substantially no harvested material from the infeed passage drops off the loader wagon. Because the shield is entrained by the front wall, no separate actuator is necessary for controlling movement of the shield. The shield does not have to close off the portion of the infeed passage forward of the lower end of the front wall hermetically. The shield may for instance be in the form of a row of rods or a roast of which openings are small enough to hold back most of the harvested material that tends to bulge up out of the infeed passage.

Particular elaborations and embodiments of the invention are set forth in the dependent claims.

Further features, effects and details of the invention appear from the detailed description and the drawings.

### BRIEF DESCRIPTION OF THE DRAWINGS

Fig. 1 is a schematic cut-away side view of a front end of an example of a loader wagon according to the invention coupled to a tractor;
Fig. 2 is a view according to Fig. 1 in which the loader wagon is in a different operating position; and
Fig. 3 is a view according to Figs. 1 and 2 in which the loader wagon is in yet another different operating position.

### DETAILED DESCRIPTION

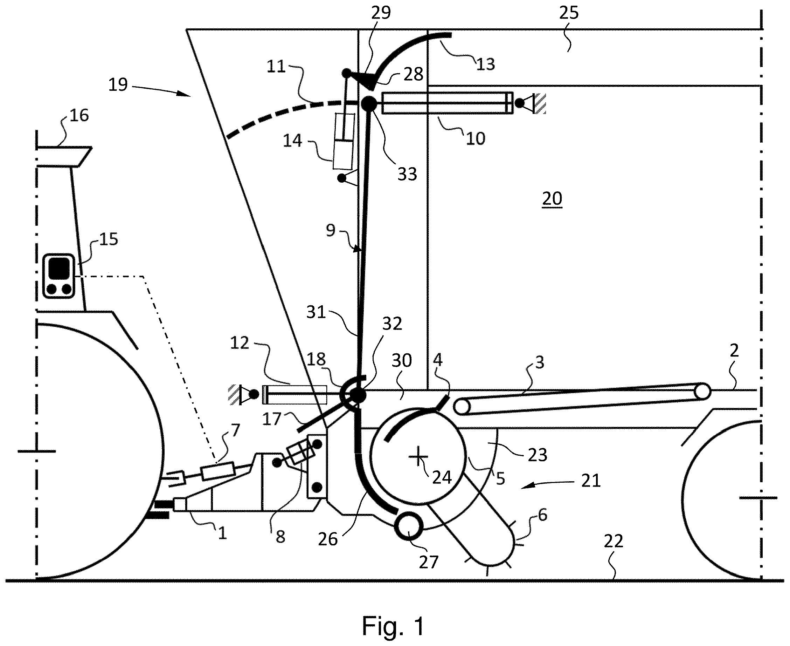

In Figs. 1-3, an example of a loader wagon coupled to a tractor 16 via a drawbar 1 of the loader wagon is shown. The tractor 16 has a power take-off shaft coupled to a drive shaft of the loader wagon. The loader wagon system has a load carrying box 19. The load carrying box 19 has a pivotable front wall 9, a bottom 2, side walls 25 and a rear wall (not shown) that can be opened for discharging. The walls 9, 25 and the bottom 2 bound a load space 20 for receiving and holding harvested stalk material (not shown), such as mowed grass silage gathered from a field by the loader wagon. Generally below the load carrying box 19, the loader wagon has a loading system 21 for gathering stalk material and transporting gathered stalk material into the load carrying box 19. The loading system 21 has a pick-up conveyor 6 for picking-up stalk material from a field 22 and a feeding rotor 5 downstream of an upstream portion of the pick-up conveyor 6 for feeding stalk material from the pick-up conveyor 6, through an infeed passage 30 in the bottom 2 of the load carrying box, into the load carrying box 19 in a forward portion of the load space 20 near a bottom end of the front wall 9. The loading system further has side plates 23 between which the feeding rotor 5 is suspended rotatably about an axis 24. A rotor cleaner 4 is provided for urging harvested material off the rotor and may for instance consist of a plurality of cleaning comb teeth that are interleaved with tines of the feeding rotor 5.

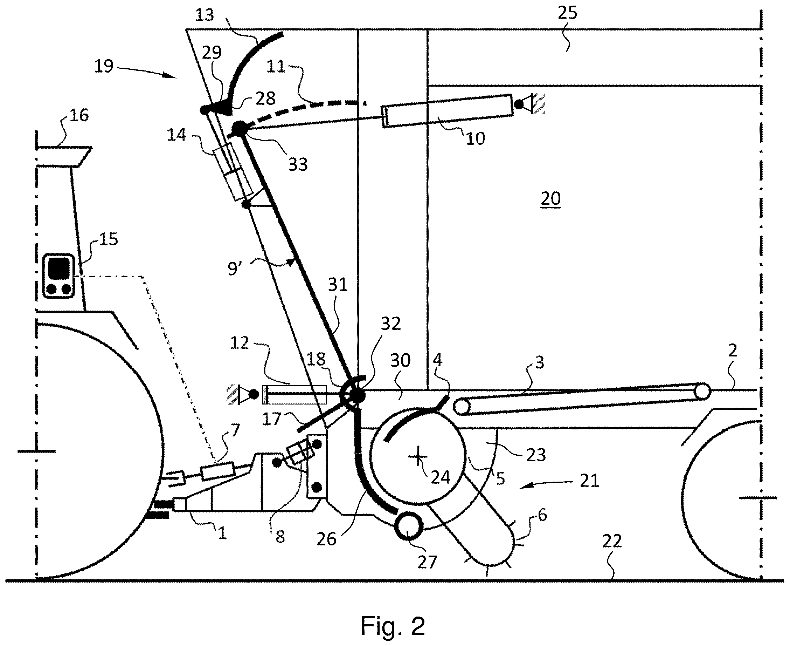

The front wall 9 is pivotable between positions 9 (Fig. 1) and 9' (Fig. 2) about a pivot axis 18. For pivoting the front wall 9, a hydraulic actuating cylinder 10 coupled between an upper portion of the front wall 9 and a fixed frame portion of the loader wagon is provided. Pivoting of the front wall between positions 9 and 9' allows the stacking of stalk material directly above the feeding rotor 5 and the tendency of stalk material to drop rearwards to be influenced, so that the extent of compression of the harvested material in an outlet area directly downstream of the rotor 5 can be controlled and in particular a uniform extent of compression over a wagon load of harvested material can be achieved. If the harvested material is very humid or even wet, the angle of the front wall is controlled in a different manner than if the harvested material is very dry and springy. In addition, when the loader wagon is nearly full, the front wall 9 can be pivoted to its most forward position to obtain a maximum volume of load space 20.

A curved lower end portion 26 of the front wall 9 forms a guide wall of the loading system 21 extending around a portion of the feeding rotor 5. This guide wall 26 is fixed suspended so that it does not pivot with the rest of the front wall 9. At the upstream end of the guide wall 26 an inlet roller 27 is provided. The inlet roller 27 is rotatably suspended.

The distance of the downstream end of the pick-up conveyor 6 to the field 22 determines the angle of the pick-up conveyor 6 relative to the floor 20 of the wagon. This angle is preferably adjusted to keep the inlet roller 27 at a constant average distance from the pick-up conveyor 6. In the present example, this is achieved by controlling an actuator 8 for adjusting the orientation of the drawbar 1 relative to rest of the loader wagon in accordance with a sensed distance of the inlet roller 27 from the pick-up conveyor 6. If the drawbar 1 is pivoted so that its front end is raised, the front end of the loader wagon is lowered towards the field 22 and vice versa.

The load carrying box 19 has a scraper floor 2 with conveyors 3 extending rearwardly from a forward, upstream end adjacent to the feeding rotor 5.

Operation of the conveyors 3 also affects the extent to which the gathered stalk material is compressed. If the conveyors 3 are stationary, compression builds up to a higher level and the faster the conveyors 3 are running the more compression in a forward portion of the load space 20 is reduced.

Above the front wall 9, a curved top barrier 13 is provided that is pivotably connected to the front wall 9 so as to be pivotable about an axis 28 near an upper end of the front wall 9 and to form a continuation of the front wall 9. For actuating pivoting of the top barrier 13, a hydraulic actuating cylinder 14 is mounted between a free end of a lever 29 of the top barrier 13 and a mounting position on the front wall 9.

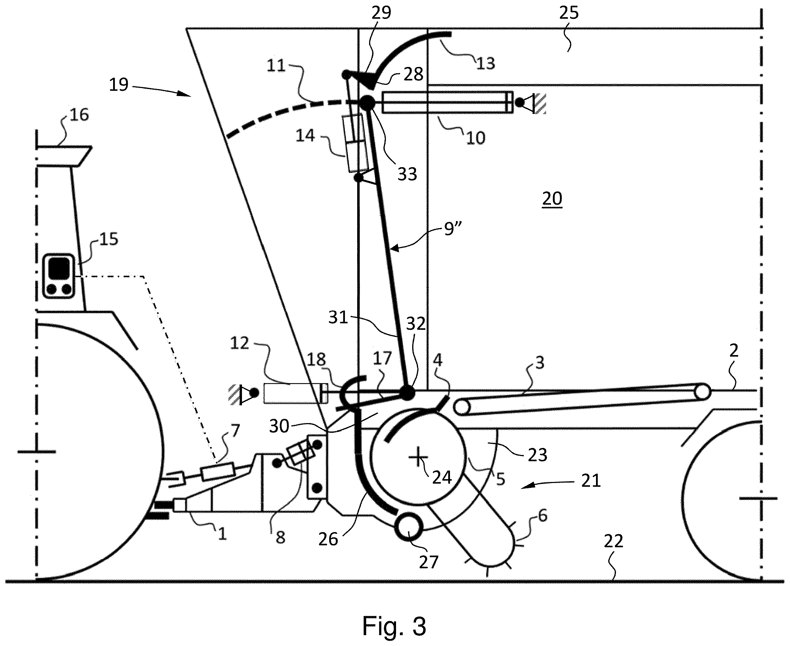

A lower end portion 31 of the front wall 9 is movable between a forward position (Figs. 1 and 2) and a rearward position (Fig. 3). This allows harvested stalk material to be pushed out of a lower forward portion of the load space 20 towards the conveyors 3, so that during discharging less of the harvested stalk material is left back in the load space 20. It is noted that the movable front wall may also be provided in the form of a wall arranged closely to the rear of a stationary forward boundary (e.g. a stationary front wall) of the loader wagon box.

Because the lower end 31 of the front wall 9 in the rearward position is rearward of at least a forward portion of the infeed passage 30, a substantial amount of the harvested material above the infeed passage 30 can be pushed towards the conveyors 3. This would, however, entail that some compressed material in the infeed passage 30 would bulge up in forward of the front wall 9 after the lower end 31 of the front wall 9 has been moved rearward and would be pushed out of the loader wagon when the front wall 9 would be moved back forward again. Such harvested material would then be lost and also have to be collected if discharging is carried out at a location where significant amounts of harvested stalk material cannot be left, such as along a public road. This would be time consuming and cumbersome. Also, bulged-up material would become trapped between a lower end 31 of the front wall 9 and a forward upper end of the infeed passage 30 and can block full forward return movement of the the front wall 9.

However, because a shield 17 is connected to a lower end 32 of the front wall 9 along an edge of the shield 17 for moving rearward and forward with the lower end 32 of the front wall 9 and the shield 17 projects forwardly from the lower end 32 of the front wall 9 and closes off the portion of the infeed passage 30 forward of the lower end 32 of the front wall 9, the upper end of the infeed passage 30 is automatically closed off forwardly of the lower end 32 of the front wall 9 if that lower end 32 is moved rearward for urging harvested material towards the conveyors 3. Thus, at least most of the harvested material in the infeed passage 30 is held back against bulging up forward of the lower end 32 of the front wall 9 and is not pushed off the loader wagon when the lower end 32 of the front wall 9 is moved back to its most forward position.

The shield 17 may rest on the upper end of the infeed passage wall 26 due to it own weight, but is preferably pressed against the upper end of the infeed passage 30, for instance by a hydraulic pressure cylinder, a gas cylinder or a guide such as a guide track or guide projections.

Because the shield 17 is entrained by the front wall 9, it automatically follows movement of the lower end 32 of the front wall 9, so no separate actuator is necessary for controlling movement of the shield 17.

The shield 17 does not have to close off the portion of the infeed passage 30 forward of the lower end 32 of the front wall 9 hermetically. The shield 17 may for instance be in the form of a rack of rods or of a roast of which openings are small enough to hold back most of the harvested material that tends to bulge up out of the infeed passage 30.

The shield 17 is pivotably connected to the lower end 32 of the front wall 9 so that it can pivot about a horizontal axis along the lower end 32 of the front wall 9. The shield 17 rests on an upper end of the forward infeed passage wall 26. Thus, it is ensured that the shield 17 stays in close contact with the upper end of the infeed passage 30 and reliably closes off that passage forward of the lower end 32 of the front wall 9. The pivotably suspended shield 17 can also accommodate to pivoting of the front wall about the axis 18 at its lower end 32 and thus effectively remain in contact.

The movability of the lower end of the front wall can be achieved in many ways, for instance by a linear forward and backward movement. In the present example, the front wall 9 is pivotable about an upper pivot axis 33 at an upper end of the front wall 9 between a position 9 shown in Fig. 1 and a position 9" shown in Fig. 3, in addition to the pivotability about the axis 18 at the lower end 32 of the front wall 9. Both axes 18 and 33 are horizontal and perpendicular to the forward and rearward directions.

From the position 9' shown in fig. 2, the front wall can also pivot rearward about the pivot axis 18 at its upper end. However, pivoting rearward about the upper pivot axis 18 at the upper end of the front wall 9 is preferably carried out after the upper end of the front wall 9 has been pivoted rearward about the lower pivot axis 32 to a position as shown in Fig. 1. Thus, the lower end 32 of the front wall 9 moves upwardly over relatively small distance when pivoting rearward, so that harvested material is pushed rearward more closely along the bottom 2 than when pivoting rearward about the upper pivot axis 18 from the position 9' shown in Fig. 2.

The lower end 32 of the front wall 9 in its forward position is located in a recessed position relative to an upper end of the forward infeed passage wall 26. Thus harvested material that is fed into the load space via the infeed passage 32 is reliably passed along the lower end 32 of the front wall 9.

Because the lower end 32 of the front wall 9 is located for moving rearward along a trajectory passing above the rotor 5, there is no need for a separate wall inside the load carrying box 19 for urging harvested material in rearward direction.

The loader wagon further has a control unit 15 for controlling the actuators 8, 10, 12 and 14. The control unit 15, in this example mounted on the tractor 16, has an input port for receiving a signal indicative of a torque driving rotation of the feeder rotor 5, in this example from a torque sensor of the drive shaft 7. The control unit 15 is programmed for reading the input signal indicative of the torque driving rotation of the feeder rotor 5 and controlling the actuators 10 and 14 in accordance with a value of the read input signal indicative of the torque driving rotation of the feeder rotor 5. Thus, the actuators 10 and 14 may for instance be controlled for forward pivoting of the front wall 9 if the gathered material falls rearwards too easily and is therefore compressed too little, which is indicated by a low torque driving the feeder rotor 5 and vice versa.

The amount of stalk material in the load space 20 and compressibility of the stalk material in the load space 20 may also be sensed by measuring the hydraulic pressure in or the force exerted by the actuator 10 coupled between the upper portion of the front wall 9 and a fixed portion of the loader wagon and/or the actuator 14 mounted between the free end of the lever 29 of the top barrier 13 and the mounting position on the front wall 9.

The control unit 15 may also have an input port for receiving a signal indicative of an amount of stalk material in at least a forward portion of the load space 20, be programmed for reading the input signal indicative of the amount of stalk material in at least the forward portion of the load space 20 and controlling the actuators 10 and 14 in accordance with a value of the read input signal indicative of the amount of stalk material in at least a forward portion of the load space 20. The signal indicative of the amount of stalk material in at least a forward portion of the load space may for instance be a signal from a load sensor at the actuator 8 that indicates the couple exerted by the drawbar 1 or at least one sensor (e.g. optical and/or ultra sound) for detecting a volume of stalk material in the load space 20 and/or the shape of the volume of stalk material in the load space 20.

## Claims

1. A loader wagon comprising:
a load carrying box (19) comprising a front wall (9), a bottom (2), side walls (25) and a rear wall that can be opened for discharging, said walls and bottom bounding a load space (20) for receiving and holding harvested stalk material; and
a loading system (21) for gathering stalk material and transporting gathered stalk material into the load carrying box (19), the loading system having a pick-up conveyor (6) for picking-up stalk material from a field (22), a feeding rotor (5) downstream of at least an upstream portion of the pick-up conveyor for feeding stalk material from the pick-up conveyor, through an infeed passage (30) in the bottom of the load carrying box, into the load carrying box in a forward portion of the load space near a bottom end of the front wall (9);
wherein at least a lower end portion (31) of the front wall (9) is movable between a forward position and a rearward position;
wherein the lower end of the front wall (9) in the rearward position is rearward of at least a forward portion of the infeed passage (30); and
wherein a shield (17) is connected to a lower end of the front wall (9) along an edge of the shield for moving rearward and forward with the lower end of the front wall (9);
**characterized in that**
the shield (17) projects forwardly from the lower end of the front wall (9) and closes off the portion of the infeed passage (30) forward of the lower end of the front wall (9).

2. A loader wagon according to claim 1, wherein the shield (17) is pivotably connected to the lower end of the front wall (9) and rests on an upper end of a forward infeed passage wall (26).

3. A loader wagon according to claim 1 or 2, wherein the front wall (9) is pivotable about an upper pivot axis (33) at an upper end of the front wall (9) and pivotable about an axis (32) at the lower end of the front wall (9).

4. A loader wagon according to any of the preceding claims, wherein the lower end of the front wall (9) in its forward position is located in a recess relative to an upper end of a forward infeed passage wall (26).

5. A method for discharging harvested stalk material from a loader wagon, the loader wagon comprising:
a load carrying box (19) comprising a front wall (9), a bottom (2), side walls (25) and a rear wall that can be opened for discharging, said walls and bottom bounding a load space (20) for receiving and holding harvested stalk material; and
a loading system (21) for gathering stalk material and transporting gathered stalk material into the load carrying box (19), the loading system having a pick-up conveyor (6) for picking-up stalk material from a field (22), a feeding rotor (5) downstream of at least an upstream portion of the pick-up conveyor (6) for feeding stalk material from the pick-up conveyor, through an infeed passage (30) in the bottom of the load carrying box, into the load carrying box in a forward portion of the load space (20) near a bottom end of the front wall (9);
wherein at least a lower end portion (31) of the front wall (9) is moved between a forward position and a rearward position;
wherein the lower end of the front wall (9) in the rearward position is rearward of at least a forward portion of the infeed passage (30); and
wherein a shield (17) is connected to a lower end of the front wall (9) along an edge of the shield, the shield moving rearward and forward with the lower end of the front wall (9);
**characterized in that**
the shield (17) projects forwardly from the lower end of the front wall (9) and closes off a portion of the infeed passage (30) that is located forwardly of the lower end of the front wall (9) as the lower end of the front wall is moved towards the rearward position and until the lower end of the front wall is moved towards its forward position.

6. A method according to claim 5, wherein, during loading, the front wall (9) is pivoted about a lower pivot axis (32) at the lower end of the front wall and, prior to or during discharging, first an upper end of the front wall is pivoted rearward about the lower pivot axis (32) and, subsequently, the lower end of the front wall (9) is pivoted rearwards about an upper pivot axis (33) at the upper end of the front wall (9).

## Patentansprüche

1. Ladewagen, umfassend:
einen Ladungsträgerkasten (19) mit einer Vorderwand (9), einem Boden (2), Seitenwänden (25) und einer Rückwand, die zum Entladen geöffnet werden kann, wobei die Wände und der Boden einen Laderaum (20) zur Aufnahme und zum Halten von geerntetem Halmgut begrenzen; und
ein Ladesystem (21) zum Sammeln von Halmgut und zum Transportieren von gesammeltem Halmgut in den Ladungsträgerkasten (19), wobei das Ladesystem einen Aufnahmeförderer (6) zum Aufnehmen von Halmgut von einem Feld (22), einen Zuführrotor (5) stromabwärts von wenigstens einem stromaufwärts gelegenen Abschnitt des Aufnahmeförderers zum Zuführen von Halmgut von dem Aufnahmeförderer durch einen Zuführkanal (30) im Boden des Ladungsträgerkastens in den Ladungsträgerkasten in einem vorderen Abschnitt des Laderaums in der Nähe eines unteren Endes der Vorderwand (9) aufweist;
wobei wenigstens ein unterer Endabschnitt (31) der Vorderwand (9) zwischen einer vorderen Position und einer hinteren Position beweglich ist;
wobei das untere Ende der Vorderwand (9) in der hinteren Position hinter wenigstens einem vorderen Abschnitt des Zuführkanals (30) hegt; und
wobei ein Schild (17) mit einem unteren Ende der Vorderwand (9) entlang einer Kante des Schilds verbunden ist, um sich mit dem unteren Ende der Vorderwand (9) nach hinten und vorne zu bewegen;
**dadurch gekennzeichnet, dass**
das Schild (17) vom unteren Ende der Vorderwand (9) nach vorne ragt und den Abschnitt des Zuführkanals (30) vor dem unteren Ende der Vorderwand (9) verschließt.

2. Ladewagen nach Anspruch 1, wobei das Schild (17) schwenkbar mit dem unteren Ende der Vorderwand (9) verbunden ist und auf einem oberen Ende einer vorderen Zuführkanalwand (26) aufliegt.

3. Ladewagen nach Anspruch 1 oder 2, wobei die Vorderwand (9) um eine obere Schwenkachse (33) an einem oberen Ende der Vorderwand (9) und um eine Achse (32) am unteren Ende der Vorderwand (9) schwenkbar ist.

4. Ladewagen nach einem der vorhergehenden Ansprüche, wobei sich das untere Ende der Vorderwand (9) in ihrer vorderen Stellung in einer Aussparung relativ zu einem oberen Ende einer vorderen Zuführkanalwand (26) befindet.

5. Verfahren zum Entladen von geerntetem Halmgut aus einem Ladewagen, wobei der Ladewagen umfasst:
einen Ladungsträgerkasten (19) mit einer Vorderwand (9), einem Boden (2), Seitenwänden (25) und einer Rückwand, die zum Entladen geöffnet werden kann, wobei die Wände und der Boden einen Laderaum (20) zur Aufnahme und zum Halten von geerntetem Halmgut begrenzen; und
ein Ladesystem (21) zum Sammeln von Halmgut und zum Transportieren von gesammeltem Halmgut in den Ladungsträgerkasten (19), wobei das Ladesystem einen Aufnahmeförderer (6) zum Aufnehmen von Halmgut von einem Feld (22), einen Zuführrotor (5) stromabwärts von wenigstens einem stromaufwärts gelegenen Abschnitt des Aufnahmeförderers (6) zum Zuführen von Halmgut von dem Aufnahmeförderer durch einen Zuführkanal (30) im Boden des Ladungsträgerkastens in den Ladungsträgerkasten in einem vorderen Abschnitt des Laderaums (20) in der Nähe eines unteren Endes der Vorderwand (9) aufweist;
wobei wenigstens ein unterer Endabschnitt (31) der Vorderwand (9) zwischen einer vorderen Position und einer hinteren Position bewegt wird;
wobei das untere Ende der Vorderwand (9) in der hinteren Position hinter wenigstens einem vorderen Abschnitt des Zuführkanals (30) hegt; und
wobei ein Schild (17) mit einem unteren Ende der Vorderwand (9) entlang einer Kante des Schilds verbunden ist, wobei sich das Schild mit dem unteren Ende der Vorderwand (9) nach hinten und vorne bewegt;
**dadurch gekennzeichnet, dass**
das Schild (17) von dem unteren Ende der Vorderwand (9) nach vorne ragt und einen Abschnitt des Zuführungsdurchgangs (30) verschließt, der sich vor dem unteren Ende der Vorderwand (9) befindet, wenn das untere Ende der Vorderwand in Richtung der rückwärtigen Position bewegt wird und bis das untere Ende der Vorderwand in Richtung seiner vorderen Position bewegt wird.

6. Verfahren nach Anspruch 5, wobei beim Beladen die Vorderwand (9) um eine untere Schwenkachse (32) am unteren Ende der Vorderwand geschwenkt wird und vor oder während des Entladens zunächst ein oberes Ende der Vorderwand um die untere Schwenkachse (32) nach hinten geschwenkt wird und anschließend das untere Ende der Vorderwand (9) um eine obere Schwenkachse (33) am oberen Ende der Vorderwand (9) nach hinten geschwenkt wird.

## Revendications

1. Remorque chargeuse comprenant :
- une benne de transport de charge (19) comprenant une paroi avant (9), un fond (2), des parois latérales (25), et une paroi arrière qui peut être ouverte pour décharger, lesdites parois et ledit fond délimitant un espace de charge (20) destiné à recevoir et à contenir des matières de tiges moissonnées ; et
- un système de chargement (21) destiné à recueillir les matières de tiges, et à transporter les matières de tiges recueillies dans la benne de transport de charge (19), le système de chargement présentant un convoyeur de ramassage (6) destiné à ramasser les matières de tiges dans un champ (22), un rotor d'alimentation (5) situé en aval d'une partie amont au moins du convoyeur de ramassage destiné à fournir les matières de tiges en provenance du convoyeur de ramassage, à travers un passage d'alimentation (30) situé dans le fond de la benne de transport de charge, dans la benne de transport de charge dans une partie avant de l'espace de charge à proximité d'une extrémité inférieure de la paroi avant (9) ;
dans laquelle une partie extrémité inférieure (31) au moins de la paroi avant (9), est mobile entre une position avant et une position arrière ;
dans laquelle l'extrémité inférieure de la paroi avant (9) dans la position arrière, se situe en arrière d'une partie avant au moins du passage d'alimentation (30) ; et
dans laquelle un dispositif de protection (17) est connecté à une extrémité inférieure de la paroi avant (9) le long d'un bord du dispositif de protection, pour un déplacement en arrière et en avant avec l'extrémité inférieure de la paroi avant (9) ;
**caractérisée en ce que**
- le dispositif de protection (17) fait saillie vers l'avant à partir de l'extrémité inférieure de la paroi avant (9), et ferme la partie du passage d'alimentation (30) en avant de l'extrémité inférieure de la paroi avant (9).

2. Remorque chargeuse selon la revendication 1, dans laquelle le dispositif de protection (17) est connecté de manière pivotante à l'extrémité inférieure de la paroi avant (9), et repose sur une extrémité supérieure d'une paroi du passage d'alimentation avant (26).

3. Remorque chargeuse selon la revendication 1 ou 2, dans laquelle la paroi avant (9) peut pivoter autour d'un axe de pivot supérieur (33) au niveau d'une extrémité supérieure de la paroi avant (9), et peut pivoter autour d'un axe (32) au niveau de l'extrémité inférieure de la paroi avant (9).

4. Remorque chargeuse selon l'une quelconque des revendications précédentes, dans laquelle l'extrémité inférieure de la paroi avant (9) dans sa position avant, se situe dans un renfoncement par rapport à une extrémité supérieure d'une paroi du passage d'alimentation avant (26).

5. Procédé destiné à décharger des matières de tiges moissonnées d'une remorque chargeuse, la remorque chargeuse comprenant :
- une benne de transport de charge (19) comprenant une paroi avant (9), un fond (2), des parois latérales (25), et une paroi arrière, qui peuvent être ouverts pour décharger, lesdites parois et ledit fond délimitant un espace de charge (20) destiné à recevoir et à contenir des matières de tiges moissonnées ; et
- un système de chargement (21) destiné à recueillir les matières de tiges, et à transporter les matières de tiges recueillies dans la benne de transport de charge (19), le système de chargement présentant un convoyeur de ramassage (6) destiné à ramasser les matières de tiges dans un champ (22), un rotor d'alimentation (5) situé en aval d'une partie amont au moins du convoyeur de ramassage (6) destiné à fournir les matières de tiges en provenance du convoyeur de ramassage, à travers un passage d'alimentation (30) situé dans le fond de la benne de transport de charge, dans la benne de transport de charge dans une partie avant de l'espace de charge (20) à proximité d'une extrémité inférieure de la paroi avant (9) ;
dans lequel une partie extrémité inférieure (31) au moins de la paroi avant (9), est déplacée entre une position avant et une position arrière ;
dans lequel l'extrémité inférieure de la paroi avant (9) dans la position arrière, se situe en arrière d'une partie avant au moins du passage d'alimentation (30) ; et
dans lequel un dispositif de protection (17) est connecté à une extrémité inférieure de la paroi avant (9) le long d'un bord du dispositif de protection, le dispositif de protection se déplaçant en arrière et en avant avec l'extrémité inférieure de la paroi avant (9) ;
**caractérisé en ce que**
- le dispositif de protection (17) fait saillie vers l'avant à partir de l'extrémité inférieure de la paroi avant (9), et ferme une partie du passage d'alimentation (30) qui se situe en avant de l'extrémité inférieure de la paroi avant (9), lorsque l'extrémité inférieure de la paroi avant est déplacée vers la position arrière, et jusqu'à ce que l'extrémité inférieure de la paroi avant soit déplacée vers sa position avant.

6. Procédé selon la revendication 5, dans lequel, pendant le chargement, la paroi avant (9) pivote autour d'un axe de pivot inférieur (32) au niveau de l'extrémité inférieure de la paroi avant et, avant ou pendant un déchargement, tout d'abord, une extrémité supérieure de la paroi avant pivote vers l'arrière autour de l'axe de pivot inférieur (32) et, ensuite, l'extrémité inférieure de la paroi avant (9) pivote en arrière autour d'un axe de pivot supérieur (33) au niveau de l'extrémité supérieure de la paroi avant (9).
